# EUROPEAN PATENT APPLICATION

(11) **EP 2 953 394 A1**
(43) Date of publication of application: **09.12.2015**
(21) Application number: 13874142.6
(22) Date of filing: 12.10.2013
(51) Int. Cl.: H04W 24/04

(54) **DEVICE, METHOD, APPARATUS AND SYSTEM FOR MAINTAINING BASE STATION, MOBILE TERMINAL, AND BASE STATION**

(30) Priority: 01.02.2013 CN 201310041571
(71) Applicant: ZTE Corporation, 518057 Shenzhen City, Guangdong Province (CN)
(72) Inventor: ZHAO, Zhiyong, Shenzhen Guangdong Province 518057 (CN)
(74) Representative: Novagraaf Technologies
(86) International application number: PCT/CN2013/085149
(87) International publication number: WO 2014/117539

(57) **Abstract**

Provided are equipment, method, device and system for maintaining a base station, a mobile terminal and a base station. The equipment includes a wireless communication component, configured to receive an operation request from a mobile terminal, wherein the operation request is used for instructing a base station to start to perform a detection; and a master control board, configured to execute the detection within the base station according to the operation request, and send a detection result to the mobile terminal via the wireless communication component. By the present disclosure, the problems of complicated and dangerous operating process and heavier workload caused by the fact that the operator is required to climb onto the tower in person to connect the PC with the base station through the network cable and is further required to input the special codes to operate the base station to detect the failure condition of the base station according to the steps of the special codes after the connection is established are solved, the connection between the base station and the mobile terminal is further established in a wireless communication manner, security and convenience are achieved, and a failure detection process of the base station is intelligent and easy to operate.

## Description

### Technical

The present disclosure relates to the field of communication, and including e.g., equipment, method, device and system for maintaining a base station, a mobile terminal and a base station.

### Background

In recent years, telecommunication infrastructures develop rapidly, there are more and more types of base stations adopting various wireless systems such as a Global System for Mobile Communication (GSM) system, a Code Division Multiple Access (CDMA) system, a Universal Mobile Telecommunications System (UMTS) and a Long Term Evolution (LTE) system, and the complexity of the technical becomes more and more increased, so that the requirements of a site on engineering installation and the speed for processing the equipment failure are more and more higher to the operator. For this reason, an equipment manufacturer and the operator have established a relatively perfect centralized network management system, and a maintainer can view a running condition of a base station of any site by logging in a fixed client. However, some maintenance work can be implemented only by operation on a machine room or iron tower of the site, for example, when the hardware failure detection of the base station is processed, a method for proximal maintenance on the base station in a related art is that an operator goes to the site in person and is required to climb onto a tower to connect a Personal Computer (PC) with the base station through a network cable, and the operator is required to input a special code to operate the base station to detect a failure condition of the base station according to steps of the special code after the connection is established; and such a method requires the operator to have higher quality, the operator is required to input a great amount of codes to detect the base station, which causes a heavier workload, and the manner of climbing onto the tower for detection is more dangerous. Therefore, how to conveniently and rapidly perform proximal maintenance on the base station and reduce the workload of the maintainer becomes important.

### Summary

Equipment, method, device and system for maintaining the base station, a mobile terminal and a base station are provided in the present disclosure, so as to solve the problems of complicated and dangerous operating process and heavier workload caused by the fact that the operator is required to climb onto the tower in person to connect the PC with the base station through the network cable and is further required to input the special codes to operate the base station to detect the failure condition of the base station according to the steps of the special codes after the connection is established in the related art.

According to one aspect of the present disclosure, equipment for maintaining a base station is provided, comprising: a wireless communication component, configured to receive an operation request from a mobile terminal, wherein the operation request is used for instructing a base station to start to perform a detection; and a master control board, configured to execute the detection within the base station according to the operation request, and send a detection result to the mobile terminal by the wireless communication component.

In an example embodiment, the wireless communication component comprises at least one of: a Wireless Fidelity, WIFI, component and a Bluetooth component.

According to another aspect of the present disclosure, a method for maintaining a base station is provided, comprising: receiving an operation request sent from a mobile terminal in a wireless communication manner, wherein the operation request is used for instructing the base station to start to perform a detection; executing the detection within the base station according to the operation request; and sending a detection result and/or operation indication information corresponding to the detection result to the mobile terminal in the wireless communication manner, wherein the operation indication information is used for instructing the mobile terminal to maintain the base station.

In an example embodiment, before receiving the operation request sent from the mobile terminal in the wireless communication manner, the method further comprises: receiving access authorization information from the mobile terminal, wherein the access authorization information is used for accessing the mobile terminal to the base station; and accessing the mobile terminal to the base station according to the access authorization information.

In an example embodiment, executing the detection within the base station according to the operation request comprises: detecting a failure condition of software and/or hardware of the base station; when a failure in the software and/or the hardware is detected, analyzing a failure reason for the failure in the software and/or the hardware; and determining operation indication information for failure recovery of the software and/or the hardware according to the failure reason.

In an example embodiment, after determining the operation indication information for the failure recovery of the software and/or the hardware according to the failure reason, the method further comprises: uploading the failure reason and the operation indication information for the failure recovery to a webpage operation interface through a web server function.

In an example embodiment, after sending the detection result and/or the operation indication information corresponding to the detection result to the mobile terminal, the method further comprises: after an operator executes a preset operation according to the operation indication information, executing a detection within the base station according to the operation request resent by the mobile terminal.

According to the other aspect of the present disclosure, a method for maintaining a base station is provided, comprising: sending an operation request to the base station in a wireless communication manner, wherein the operation request is used for instructing the base station to start to perform a detection; and receiving a detection result and/or operation indication information corresponding to the detection result in the wireless communication manner, wherein the detection result is obtained by the base station according to the operation request.

In an example embodiment, before sending the operation request to the base station in the wireless communication manner, the method further comprises: logging in, by a mobile terminal, a network management system to acquire access authorization information used for accessing the base station; and accessing, by the mobile terminal, the base station according to the access authorization information.

In an example embodiment, logging in, by the mobile terminal, the network management system to acquire the access authorization information used for accessing the base station comprises: logging in, by the mobile terminal through a public communication network, the network management system to acquire the access authorization information; or, communicating, by the mobile terminal, with a service worker of the network management system in a voice manner to acquire the access authorization information.

In an example embodiment, the network management system is based on a cloud-computing-based network management architecture.

In an example embodiment, after receiving the detection result and/or the operation indication information corresponding to the detection result obtained by the base station according to the operation request, the method further comprises: storing, by the mobile terminal, the operation indication information corresponding to the detection result on the mobile terminal, or uploading, by the mobile terminal, the operation indication information corresponding to the detection result to the network management system through a public communication network.

According to another aspect of the present disclosure, a device for maintaining a base station is provided, comprising: a first receiving component, configured to receive an operation request sent from a mobile terminal in a wireless communication manner, wherein the operation request is used for instructing the base station to start to perform a detection; a detecting component, configured to execute the detection within the base station according to the operation request; and a first sending component, configured to send a detection result and/or operation indication information corresponding to the detection result to the mobile terminal in the wireless communication manner, wherein the operation indication information is used for instructing the mobile terminal to maintain the base station.

In an example embodiment, the device further comprises: the first receiving component, further configured to receive access authorization information from the mobile terminal, wherein the access authorization information is used for accessing the mobile terminal to the base station; and a first accessing component, configured to enable the mobile terminal to access the base station according to the access authorization information.

In an example embodiment, the detecting component comprises: a detecting element, configured to detect a failure condition of software and/or hardware of the base station; an analyzing element, configured to, when a failure in the software and/or the hardware is detected, analyze a failure reason for the failure in the software and/or the hardware; and a determining element, configured to determine operation indication information for failure recovery of the software and/or the hardware according to the failure reason.

In an example embodiment, the device further comprises: an uploading component, configured to upload the failure reason and the operation indication information for the failure recovery to a webpage operation interface through a web server function.

According to the other aspect of the present disclosure, a base station is provided, comprising: the device for maintaining the base station according to any one of the above devices.

According to the other aspect of the present disclosure, a device for maintaining a base station is provided, comprising: a second sending component, configured to send an operation request to the base station in a wireless communication manner, wherein the operation request is used for instructing the base station to start to perform a detection; and a second receiving component, configured to receive a detection result and/or operation indication information corresponding to the detection result in the wireless communication manner, wherein the detection result is obtained by the base station according to the operation request.

In an example embodiment, the device further comprises: an acquiring component, configured to log in a network management system to acquire access authorization information used for accessing the base station; and a second accessing component, configured to access the base station according to the access authorization information.

In an example embodiment, the acquiring component comprises: a first acquiring element, configured to log in through a public communication network, the network management system to acquire the access authorization information; and a second acquiring element, configured to communicate with a service worker of the network management system in a voice manner to acquire the access authorization information.

In an example embodiment, the device further comprises: a storing component, configured to store the operation indication information corresponding to the detection result on the mobile terminal; and an uploading component, configured to upload the operation indication information corresponding to the detection result to the network management system through a public communication network.

According to another aspect of the present disclosure, a mobile terminal is provided, comprising: the device for maintaining the base station according to any one of the above devices.

According to another aspect of the present disclosure, a system for maintaining the base station is provided, comprising: the base station according to the above base station; the mobile terminal according to the above mobile terminal; and a network management system, configured to provide access authorization information used for accessing the base station for the mobile terminal, and store data uploaded by the base station and/or the mobile terminal, wherein the data comprises at least one of: a detection result and operation indication information corresponding to the detection result.

According to the present disclosure, the following equipment is adopted: the wireless communication component and the master control board are provided in the equipment for maintaining the base station, wherein the wireless communication component is configured to receive and send interactive signals between the base station and the mobile terminal, and the master control board is configured to execute the detection within the base station according to the operation request. By the present disclosure, the problems of complicated and dangerous operating process and heavier workload caused by the fact that the operator is required to climb onto the tower in person to connect the PC with the base station through the network cable and is further required to input the special codes to operate the base station to detect the failure condition of the base station according to steps of the special codes after the connection is established are solved, the connection between the base station and the mobile terminal is further established in the wireless communication manner, security and convenience are achieved, and a failure detection process of the base station is intelligent and easy to operate.

### Brief Description of the Drawings

The drawings described here are adopted to provide further understanding of the present disclosure, and form a part of the present disclosure. Schematic embodiments of the present disclosure and description thereof are adopted to explain the present disclosure and not intended to improperly limit the present disclosure. In the drawings:
Fig. 1 is an architecture diagram of base station maintenance equipment according to an embodiment of the present disclosure;
Fig. 2 is a flowchart of a base station maintenance method according to an embodiment of the present disclosure;
Fig. 3 is a flowchart of another base station maintenance method according to an embodiment of the present disclosure;
Fig. 4 is a first structure diagram of a base station maintenance device according to an embodiment of the present disclosure;
Fig. 5 is a structure diagram of a detecting component of a base station maintenance device according to an embodiment of the present disclosure;
Fig. 6 is a second structure diagram of a base station maintenance device according to an embodiment of the present disclosure;
Fig. 7 is a third structure diagram of a base station maintenance device according to an embodiment of the present disclosure;
Fig. 8 is a first structure diagram of another base station maintenance device according to an embodiment of the present disclosure;
Fig. 9 is a second structure diagram of another base station maintenance device according to an embodiment of the present disclosure;
Fig. 10 is a structure diagram of an acquiring component of another base station maintenance device according to an embodiment of the present disclosure;
Fig. 11 is a third structure diagram of another base station maintenance device according to an embodiment of the present disclosure;
Fig. 12 is an architecture diagram of another base station maintenance system according to an embodiment of the present disclosure;
Fig. 13 is a diagram of a cloud-computing-based base station proximal maintenance system according to a preferred embodiment of the present disclosure;
Fig. 14 is a diagram of internal components of a base station proximal maintenance device according to a preferred embodiment of the present disclosure;
Fig. 15 is a flowchart of interaction among three network elements of an intelligent terminal, a base station and a network management cloud according to a preferred embodiment of the present disclosure; and
Fig. 16 is a flowchart of proximal maintenance of a base station according to a preferred embodiment of the present disclosure.

### Detailed Description of the Embodiments

The present disclosure is described below with reference to the drawings and embodiments in detail. It is important to note that the embodiments in the present disclosure and characteristics in the embodiments can be combined under the condition of no conflicts.

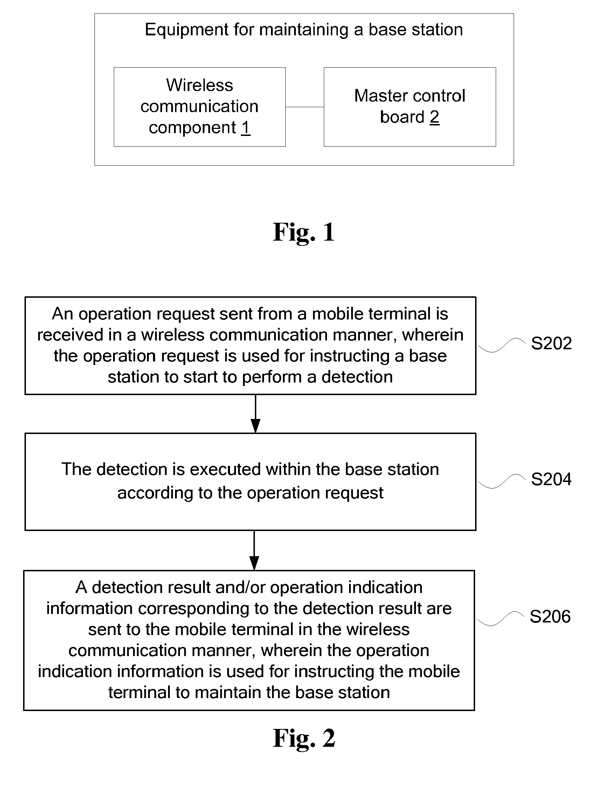

For the problems of complicated and dangerous operating process and heavier workload caused by the fact that an operator is required to climb onto the tower in person to connect the PC with a base station through the network cable and is further required to input the special codes to operate the base station to detect the failure condition of the base station according to steps of the special codes after the connection is established in a related art, equipment for maintaining the base station is provided in the embodiment of the present disclosure, the architecture diagram of the equipment may be shown in Fig. 1, and the equipment includes:
a wireless communication component 1, configured to receive an operation request from a mobile terminal, wherein the operation request is used for instructing a base station to start to perform a detection; and
a master control board 2, connected with the wireless communication component 1 and configured to execute the detection within the base station according to the operation request, and send a detection result to the mobile terminal via the wireless communication component.

The equipment for maintaining the base station provided by the embodiment adopts the wireless communication component 1 and the master control board 2, and via the wireless communication component 1, the problem that the operator is required to climb onto the tower in person to connect the PC with the base station through the network cable is solved, the operator is not required to climb onto the tower for operation, and a safety factor is increased; and the master control board 2 is adopted during the failure detection, and the master control board 2 may automatically run and directly obtain a detection result, so that the problem that the operator is required to input the special codes to operate the base station to detect the failure condition of the base station according to the steps of the special codes is solved, and an operation process is intelligent. During practical setting, the mobile terminal may be a notebook computer, and certainly may be a mobile phone which is more convenient; and the wireless communication component 1 may be a WIFI component, a Bluetooth component and the like. For example, when the wireless communication component 1 is a WIFI component, the WIFI component is provided in the equipment for maintaining base station, so that the base station can communicated with the mobile terminal for data signal interaction in a WIFI manner.

Based on the base station with the equipment for maintaining the base station, a method for maintaining the base station is provided in the embodiment of the present disclosure, which is applied to the base station side, and as shown in Fig. 2, the method includes Step 202 to Step 206:
Step 202: an operation request sent from a mobile terminal is received in a wireless communication manner, wherein the operation request is used for instructing a base station to start to perform a detection;
Step 204: the detection is executed within the base station according to the operation request; and
Step 206: a detection result and/or operation indication information corresponding to the detection result are sent to the mobile terminal in the wireless communication manner, wherein the operation indication information is used for instructing the mobile terminal to maintain the base station.

Before the base station receives the operation request sent in the wireless communication manner from the mobile terminal, an authentication and access process may further be set. For example, the base station receives from the mobile terminal access authorization information used for accessing the mobile terminal to the base station, and then the mobile terminal accesses the base station according to the access authorization information. By the authentication process, the security of intersystem interaction can be improved.

After the mobile terminal accesses the base station, the base station may execute the detection wihtin the base station according to the operation request sent by the mobile terminal. For example, during the failure detection, a failure condition of software and/or hardware of the base station may be detected at first; when there is no failure, indication information instructing no failure may be returned to the mobile terminal; and when a failure in the software and/or the hardware is detected, a failure reason for the failure in the software and/or the hardware is analyzed, and operation indication information for failure recovery of the software and/or the hardware are determined according to the failure reason. For example, under the condition that transmission connection of the base station is detected to be abnormal, the operation indication information sent to the mobile terminal may be as follows: (1) reconnecting a transmission line, (2) performing self re-inspection and (3) checking whether a self-inspection result indicates normality or not. The operator may operate according to the operation indication information. After the operator executes a preset operation for recovering a failure link according to the operation indication information, the base station re-executes failure detection within the base station according to an instruction of executing (2) sent by the operator.

In an implementation process, after the base station determines the operation indication information for the failure recovery of the software and/or the hardware according to the failure reason, the failure reason and the operation indication information for the failure recovery may further be uploaded to a webpage operation interface through a web server function, and in such a manner, a subsequent operator may view the operating process of the related failure through the network, a sharing platform is provided, and the ability of the operator is favourably improved.

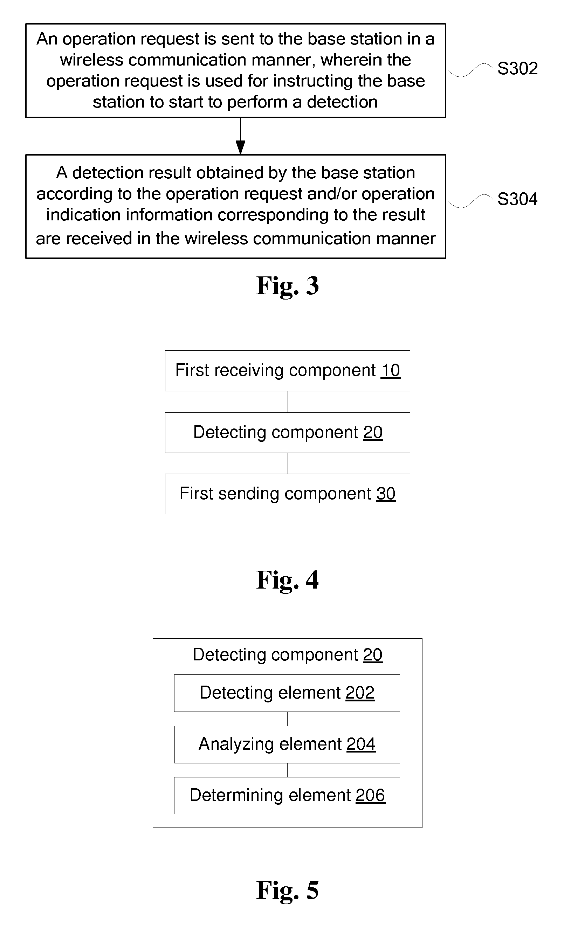

Corresponding to the method for maintaining the base station for the base station side, a method for maintaining the base station is further provided in the embodiment of the present disclosure, which is applied to a mobile terminal side, and as shown in Fig. 3, the method includes Step 302 to Step 304:
Step 302: an operation request is sent to the base station in a wireless communication manner, wherein the operation request is used for instructing the base station to start to perform a detection; and
Step 304: a detection result obtained by the base station according to the operation request and/or operation indication information corresponding to the result are received in the wireless communication manner.

Before the operation request is sent in the wireless communication manner, a mobile terminal may log in a network management system to acquire access authorization information used for accessing the base station, and then accesses the base station according to the obtained access authorization information. In an implementation process, the mobile terminal may acquire the access authorization information in different manners. For example, the mobile terminal may log in through a public communication network, the network management system to acquire the access authorization information, or, the mobile terminal may communicate with a service worker of the network management system in a voice manner to acquire the access authorization information. In terms of selection of the network management system, a network management system based on a cloud-computing-based network management architecture may be preferred.

After the mobile terminal receives the detection result obtained by the base station according to the operation request and/or the operation indication information corresponding to the detection result in the wireless communication manner, an operator may execute corresponding operation according to the given operation indication information. For the mobile terminal, the mobile terminal may store the operation indication information corresponding to the detection result in the mobile terminal, or may further upload, through the public communication network, the operation indication information corresponding to the detection result to the network management system to be backed up by the system or provide shared data for other operators.

The device for maintaining the a base station is further provided in the embodiment of the present disclosure, which may be provided in the base station to implement a method for maintaining the base station for a base station side. The base station maintenance device may be shown in Fig. 4, including: a first receiving component 10, configured to receive an operation request sent from a mobile terminal in a wireless communication manner, wherein the operation request is used for instructing the base station to start to perform a detection; a detecting component 20, coupled with the first receiving component 10 and configured to execute the detection within the base station according to the operation request; and a first sending component 30, coupled with the detecting component 20 and configured to send a detection result and/or operation indication information corresponding to the detection result to the mobile terminal in the wireless communication manner, wherein the operation indication information is used for instructing the mobile terminal to maintain the base station.

Fig. 5 shows an example structure diagram of the detecting component 20, and the detecting component 20 includes: a detecting element 202, configured to detect a failure condition of software and/or hardware of the base station; an analyzing element 204, coupled with the detecting element 202 and configured to, when a failure in the software and/or the hardware is detected, analyze a failure reason for the failure in the software and/or the hardware; and a determining element 206, coupled with the analyzing element 204 and configured to determine operation indication information for failure recovery of the software and/or the hardware according to the failure reason.

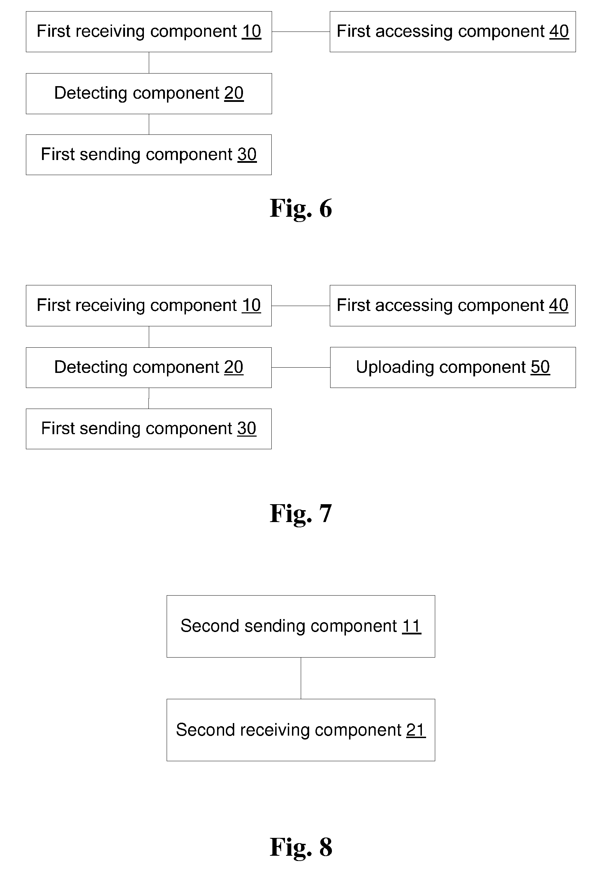

As shown in Fig. 6, the device for maintaining the base station is further provided in the embodiment, and the device may further include the first receiving component 10, further configured to receive access authorization information from the mobile terminal, wherein the access authorization information is used for accessing the mobile terminal to the base station; and a first accessing component 40, coupled with the first receiving component 10 and configured to enable the mobile terminal to access the base station according to the access authorization information.

When it is necessary to share or store the detected failure reason and the operation indication information for the failure recovery, the device may, as shown in Fig. 7, further include: an uploading component 50, coupled with the detecting component 20 and configured to upload the failure reason and the operation indication information for the failure recovery to a webpage operation interface through a web server function.

A device for maintaining the base station is further provided in the embodiment of the present disclosure, which may be provided in a mobile terminal to implement a method for maintaining the base station for a mobile terminal side. The device for maintaining the base station may be shown in Fig. 8, including: a second sending component 11, configured to send an operation request to the base station in a wireless communication manner, wherein the operation request is used for instructing the base station to start to perform a detection; and a second receiving component 21, coupled with the second sending component 11 and configured to receive a detection result obtained by the base station according to the operation request and/or operation indication information corresponding to the detection result in the wireless communication manner.

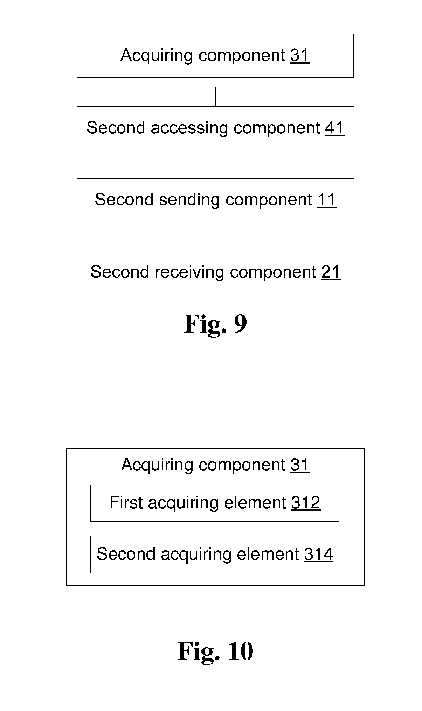

Under the condition that access authorization information is required, the mobile terminal may access the base station only after obtaining the access authorization information, and then the device may, as shown in Fig. 9, further include: an acquiring component 31, configured to log in a network management system to acquire access authorization information used for accessing the base station; and a second accessing component 41, coupled with the acquiring component 31 and the second sending component 11 and configured to access the base station according to the access authorization information.

Fig. 10 further shows an example structure diagram of the acquiring component 31, and the acquiring component 31 includes: a first acquiring element 312, configured to log in through a public communication network, the network management system to acquire the access authorization information; and a second acquiring element 314, coupled with the first acquiring element 312 and configured to communicate with a service worker of the network management system in a voice manner to acquire the access authorization information.

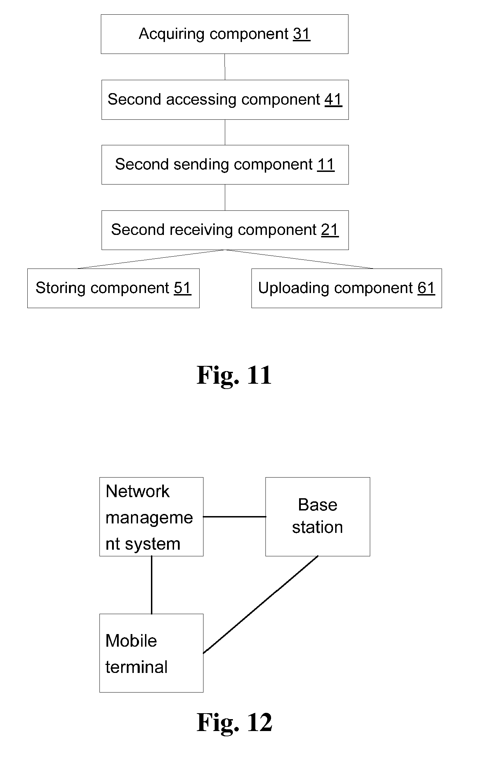

When it is necessary to share and/or store the detected failure reason and the operation indication information for failure recovery, the device may, as shown in Fig. 11, further include: a storing component 51, coupled with the second receiving component 21 and configured to store the operation indication information corresponding to the detection result on the mobile terminal; and an uploading component 61, coupled with the second receiving component 21 and configured to upload the operation indication information corresponding to the detection result to the network management system through a public communication network.

In an optional example, a system for maintaining the base station is further provided in the embodiment of the present disclosure, and the system includes the above-mentioned mobile terminal, the above-mentioned base station and a network management system. Fig. 12 shows a structure diagram of the system for maintaining the base station. In the system, the base station is a base station with the above-mentioned device for maintaining the base station, the mobile terminal is a mobile terminal with another device for maintaining the base station, and the network management system is configured to provide access authorization information for accessing the base station for the mobile terminal, and certainly may further be configured to store data uploaded by the base station and/or the mobile terminal. The network management system, the base station and the mobile terminal of the system form a closed-loop network, so that an operator may be helped to conveniently and rapidly know a running state of the base station on a site, a workload of manual interaction and the like between the site and a centralized network manager is reduced, and the working efficiency is improved.

### Example embodiment

With reference to a network management cloud, a base station proximal maintenance method, device and system based on cloud-computing are provided in the example embodiment.

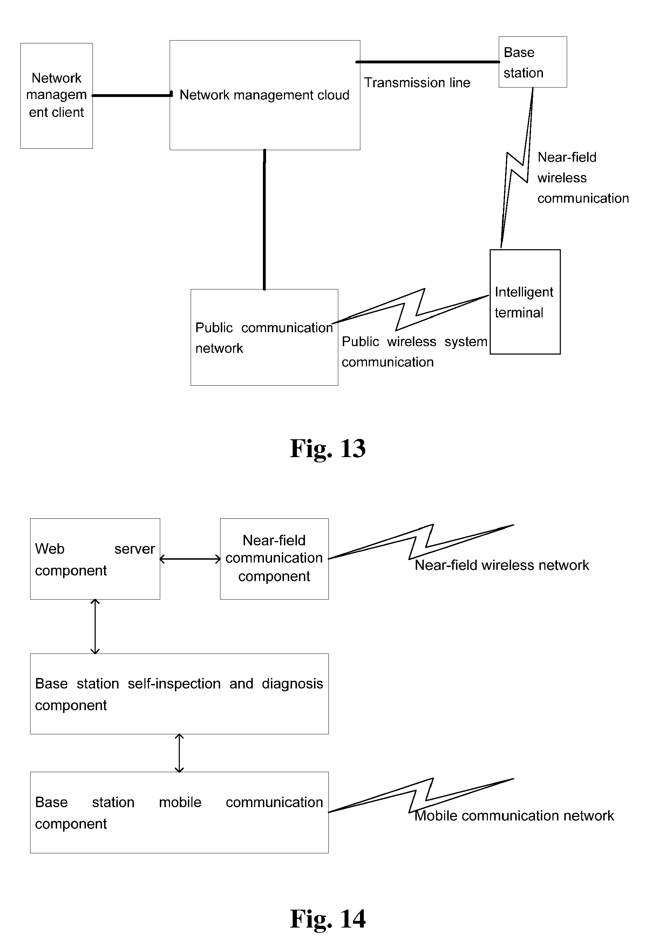

The system provided by the embodiment may, as shown in Fig. 13, include a network management cloud (one of network management systems), a base station and an intelligent terminal (one of mobile terminals). The network management cloud refers to a cloud-computing-based network management architecture; the base station supports functions such as function self-inspection, failure diagnosis, failure processing indication and the like, supports a web server function, and supports a function of accessing a near-field wireless communication network such as WIFI; and the intelligent terminal refers to terminal equipment capable of communicating with the network management cloud through a public communication network and supporting a near-field wireless communication manner such as WIFI.

The base station proximal maintenance method based on the cloud-computing provided in the embodiment includes the following processing process: the intelligent terminal logs in, through a public communication network, the network management cloud to acquire access authorization information of the base station to be processed, or the intelligent terminal acquires the access authorization information of the base station to be processed in a voice manner; the intelligent terminal is connected to the base station to be processed in the vicinity of the base station to be processed in a near-field communication manner by virtue of the authorization information obtained from the network management cloud; the intelligent terminal sends an operation request to a web server of the base station to be processed to acquire information, provided by the base station, about self inspection, failure diagnosis, operation indication and the like; and the intelligent terminal uploads an operation record fed back by the base station to be processed to the network management cloud through the public communication network, or stores the operation record in the intelligent terminal.

The proximal maintenance method supported by the base station in the embodiment includes the following process: the base station receives a near-field communication access request from the intelligent terminal; the base station confirms the near-field communication access request and authorization information, which are sent from the intelligent terminal, and establishes a near-field communication relationship; the base station receives an operation request from the intelligent terminal, executes operation of self inspection, failure diagnosis and the like, and sends information about self inspection, failure diagnosis, operation indication and the like to the intelligent terminal; and the base station feeds back an operation result to the intelligent terminal.

The device supporting base station proximal maintenance in the embodiment has a general mobile communication function, and further includes multiple components. Fig. 14 shows a diagram of the internal components, and the device includes function components as follows: a near-field wireless communication component, a base station self-inspection and diagnosis component and a web server component, wherein the near-field wireless communication component provides a near-field wireless communication network, and realizes the communication connection with the intelligent terminal; the base station self-inspection and diagnosis component implements self inspection and failure diagnosis on the base station, and provides contents about operation indication corresponding to self inspection, diagnosis and the like; and the web server component provides functions of network access authorization management, network webpage interaction and the like, and supports the publication of the information, provided by the self inspection and diagnosis component, about operation indication corresponding to the self inspection, the diagnosis and the like to the intelligent terminal.

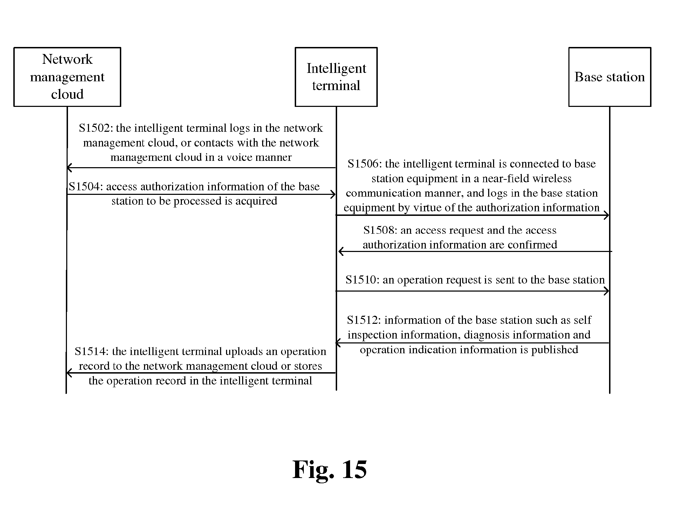

Fig. 15 is a flowchart of interaction among three network elements of a base station, an intelligent terminal and a network management cloud according to the example embodiment, and the processes of the method include Step 1502 to Step 1514.

Step 1502: the intelligent terminal logs in the network management cloud, or contacts with the network management cloud in a voice manner.

Step 1504: access authorization information of the base station to be processed is acquired.

Step 1506: the intelligent terminal is connected to base station equipment in a near-field wireless communication manner, and logs in the base station equipment by virtue of the authorization information.

Step 1508: an access request and the access authorization information are confirmed.

Step 1510: an operation request is sent to the base station.

Step 1512: information of the base station such as self inspection information, diagnosis information and operation indication information is published.

Step 1514: the intelligent terminal uploads an operation record to the network management cloud or stores the operation record in the intelligent terminal.

The method is described below with reference to specific embodiments and drawings.

### Embodiment 1

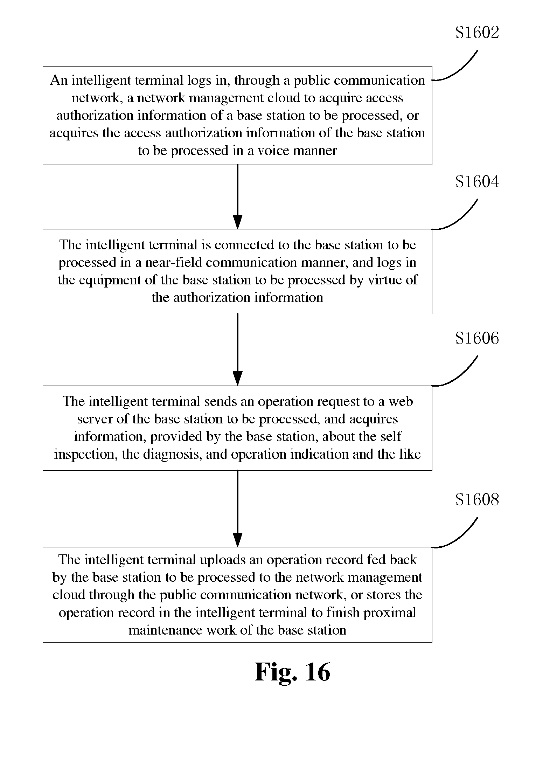

If an external failure detection is performed on the base station, a base station proximal maintenance flow is as shown in Fig. 16, and the external failure processing of the base station includes Step 1602 to Step 1608.

Step 1602: the intelligent terminal logs in, through a public communication network, the network management cloud to acquire the access authorization information of a near-field wireless communication network of the base station to be processed, for example, a username and a password for accessing a WIFI network of the base station.

The intelligent terminal has a webpage login function, can log in the network management cloud through the public communication network, for example, a wireless communication network or a wire network, and acquires access permission authorization information of the base station after being authenticated. The intelligent terminal may further communicate with a server of the network management cloud to acquire the access authorization information of the base station to be processed in a voice manner. The network management cloud is a cloud-computing-based network management network, supports a function of accessing through the public wireless communication network, and supports a function of communication with the intelligent terminal.

Step 1604: the intelligent terminal scans the near-field wireless communication network, for example, the WIFI network, of the base station in the vicinity of the base station to be processed, and then logs in the base station by virtue of the access authorization information.

The intelligent terminal has a near-field communication function, for example, a WIFI communication function or a Bluetooth communication function. The base station has the near-field communication function, for example, the WIFI communication function or the Bluetooth communication function.

Step 1606: the intelligent terminal sends an operation request to the base station, and acquires the information about the self inspection, the information about the diagnosis and the operation indication information published by the base station through a web server component.

For example, the base station performs the detection through the self inspection and diagnosis component after receiving the operation request from the intelligent terminal, and when the obtained information is a transmission connection abnormity alarm of the base station, gives operation prompts of (1) reconnecting a transmission line, (2) performing self re-inspection and (3) checking whether a self-inspection result indicates normality or not.

The intelligent terminal acquires the information and operation indication from the base station, and sequentially implements the operation indication. For example, after step (1) is finished, the base station sends an operation request to start step (2), the base station may initiate self inspection operation, then the base station sends self inspection result information to the intelligent terminal through the web server component, and the intelligent terminal executes (3), and displays the self inspection result instructing normality.

The base station has a web server function, the web server function refers to a web server function, that is, a network protocol such as Hyper Text Transport Protocol (HTTP) can be processed. After a communication request such as an HTTP communication request is received from the intelligent terminal, a web server may publish a webpage operation interface to the intelligent terminal in response to the HTTP communication request. The base station and the intelligent terminal may finish the interaction work of the operation request and operation information publication and the like on the webpage operation interface.

The base station has the functions such as self inspection, diagnosis and operation indication. The self inspection information, the diagnosis result and the operation indication information are published on the webpage operation interface through the web server function.

Step 1608: the intelligent terminal uploads the operation record to the network management cloud through the public communication network.

### Embodiment 2

If the internal failure detection is performed on the base station, the internal failure processing flow within the base station includes Step 1 to Step 4.

Step 1: the intelligent terminal logs in the network management cloud through the public communication network, and acquires the access authorization information of the near-field wireless communication network of the base station to be processed after being authenticated, for example, the username and password for accessing the WIFI network of the base station.

Step 2: the intelligent terminal scans the near-field wireless communication network, for example, the WIFI network, of the base station in the vicinity of the base station to be processed, and then logs in the base station by virtue of the access authorization information.

Step 3: the intelligent terminal sends an operation request to the base station, and acquires the information about the self inspection, the information about the diagnosis and the operation indication information published by the base station through the web server component.

For example, after the base station performs self inspection through the self inspection and diagnosis component, when the obtained information is that the clock component of the base station is abnormal, the following operation prompts are given: (1) replacing the base station, (2) acquiring access authorization information of new equipment from the network management cloud, (3) re-powering on, (4) the intelligent terminal logging in the base station, (5) performing self re-inspection on the base station and (6) checking whether the self inspection result indicates normality or not.

The intelligent terminal views the information and operation steps published by the base station on a network webpage, and interacts with the base station. For example, after step (1) is finished, the intelligent terminal acquires the access authorization information of the new equipment from the network management cloud according to step (2) in a voice manner, namely by making a call, the intelligent terminal logs in the base station to finish (4) after step (3) is finished, the intelligent terminal requests the base station to initiate self inspection to finish step (5) on the operation webpage, then the base station publishes self inspection result information on the page, and the intelligent terminal views the self inspection result, and displays the self inspection result instructing normality to finish step (6).

Step 4: the intelligent terminal stores the operation record in the intelligent terminal, and finishes maintenance work.

Wherein, the intelligent terminal has a data storage function.

From the above, it can be seen that the present disclosure achieves the following technical effects: by the base station proximal maintenance method and device provided in the embodiment of the present disclosure, the operator may be helped to conveniently and rapidly know the running state of the base station on the site, the workload of manual interaction between the site and a centralized network manager and the like is reduced, and working efficiency is improved.

Obviously, those skilled in the art should know that each component or step of the embodiment of the present disclosure can be implemented by a universal computing device, and the components or steps can be concentrated on a single computing device or distributed on a network formed by a plurality of computing devices, and can optionally be implemented by programmable codes executable for the computing devices, so that the components or steps can be stored in a storage device for execution with the computing devices, or and under certain conditions, the shown or described steps can be executed in a sequence different from that described here, or the components or steps can form each integrated circuit component respectively, or multiple components or steps therein can form a single integrated circuit component for implementation. As a consequence, the present disclosure is not limited to any specific hardware and software combination.

The above is only the preferred embodiment of the present disclosure and not intended to limit the present disclosure, and for those skilled in the art, the present disclosure may have various modifications and variations. Any modifications, equivalent replacements, improvements and the like within the spirit and principle of the present disclosure shall fall within the scope of protection of the present disclosure.

From the above, the equipment, method, device and system for maintaining a base station, a mobile terminal and a base station provided by the embodiment of the present disclosure have beneficial effects as follows: the problems of complicated and dangerous operating process and heavier workload caused by the fact that the operator is required to climb onto the tower in person to connect the PC with the base station through the network cable and is further required to input the special codes to operate the base station to detect the failure condition of the base station according to the steps of the special codes after the connection is established are solved, the connection between the base station and the mobile terminal is further established in the wireless communication manner, security and convenience are achieved, and the failure detection process of the base station is intelligent and easy to operate.

## Claims

1. Equipment for maintaining a base station, **characterized by** comprising:
a wireless communication component, configured to receive an operation request from a mobile terminal, wherein the operation request is used for instructing a base station to start to perform a detection; and
a master control board, configured to execute the detection within the base station according to the operation request, and send a detection result to the mobile terminal by the wireless communication component.

2. The equipment according to claim 1, **characterized in that** the wireless communication component comprises at least one of: a Wireless Fidelity, WIFI, component and a Bluetooth component.

3. A method for maintaining a base station, **characterized by** comprising:
receiving an operation request sent from a mobile terminal in a wireless communication manner, wherein the operation request is used for instructing the base station to start to perform a detection;
executing the detection within the base station according to the operation request; and
sending a detection result and/or operation indication information corresponding to the detection result to the mobile terminal in the wireless communication manner, wherein the operation indication information is used for instructing the mobile terminal to maintain the base station.

4. The method according to claim 3, **characterized in that** before receiving the operation request sent from the mobile terminal in the wireless communication manner, the method further comprises:
receiving access authorization information from the mobile terminal, wherein the access authorization information is used for accessing the mobile terminal to the base station; and
accessing the mobile terminal to the base station according to the access authorization information.

5. The method according to claim 3 or 4, **characterized in that** executing the detection within the base station according to the operation request comprises:
detecting a failure condition of software and/or hardware of the base station;
when a failure in the software and/or the hardware is detected, analyzing a failure reason for the failure in the software and/or the hardware; and
determining operation indication information for failure recovery of the software and/or the hardware according to the failure reason.

6. The method according to claim 5, **characterized in that** after determining the operation indication information for the failure recovery of the software and/or the hardware according to the failure reason, the method further comprises:
uploading the failure reason and the operation indication information for the failure recovery to a webpage operation interface through a web server function.

7. The method according to claim 6, **characterized in that** after sending the detection result and/or the operation indication information corresponding to the detection result to the mobile terminal, the method further comprises:
after an operator executes a preset operation according to the operation indication information, executing a detection within the base station according to the operation request resent by the mobile terminal.

8. A method for maintaining a base station, **characterized by** comprising:
sending an operation request to the base station in a wireless communication manner, wherein the operation request is used for instructing the base station to start to perform a detection; and
receiving a detection result and/or operation indication information corresponding to the detection result in the wireless communication manner, wherein the detection result is obtained by the base station according to the operation request.

9. The method according to claim 8, **characterized in that** before sending the operation request to the base station in the wireless communication manner, the method further comprises:
logging in, by a mobile terminal, a network management system to acquire access authorization information used for accessing the base station; and
accessing, by the mobile terminal, the base station according to the access authorization information.

10. The method according to claim 9, **characterized in that** logging in, by the mobile terminal, the network management system to acquire the access authorization information used for accessing the base station comprises:
logging in, by the mobile terminal through a public communication network, the network management system to acquire the access authorization information; or,
communicating, by the mobile terminal, with a service worker of the network management system in a voice manner to acquire the access authorization information.

11. The method according to claim 9 or 10, **characterized in that** the network management system is based on a cloud-computing-based network management architecture.

12. The method according to claim 11, **characterized in that** after receiving the detection result and/or the operation indication information corresponding to the detection result obtained by the base station according to the operation request, the method further comprises:
storing, by the mobile terminal, the operation indication information corresponding to the detection result on the mobile terminal, or uploading, by the mobile terminal, the operation indication information corresponding to the detection result to the network management system through a public communication network.

13. A device for maintaining a base station, **characterized by** comprising:
a first receiving component, configured to receive an operation request sent from a mobile terminal in a wireless communication manner, wherein the operation request is used for instructing the base station to start to perform a detection;
a detecting component, configured to execute the detection within the base station according to the operation request; and
a first sending component, configured to send a detection result and/or operation indication information corresponding to the detection result to the mobile terminal in the wireless communication manner, wherein the operation indication information is used for instructing the mobile terminal to maintain the base station.

14. The device according to claim 13, **characterized in that** the device further comprises:
the first receiving component, further configured to receive access authorization information from the mobile terminal, wherein the access authorization information is used for accessing the mobile terminal to the base station; and
a first accessing component, configured to enable the mobile terminal to access the base station according to the access authorization information.

15. The device according to claim 13 or 14, **characterized in that** the detecting component comprises:
a detecting element, configured to detect a failure condition of software and/or hardware of the base station;
an analyzing element, configured to, when a failure in the software and/or the hardware is detected, analyze a failure reason for the failure in the software and/or the hardware; and
a determining element, configured to determine operation indication information for failure recovery of the software and/or the hardware according to the failure reason.

16. The device according to claim 15, the device further comprises:
an uploading component, configured to upload the failure reason and the operation indication information for the failure recovery to a webpage operation interface through a web server function.

17. A base station, **characterized by** comprising: the device for maintaining the base station according to any one of claims 13 to 16.

18. A device for maintaining a base station, **characterized by** comprising:
a second sending component, configured to send an operation request to the base station in a wireless communication manner, wherein the operation request is used for instructing the base station to start to perform a detection; and
a second receiving component, configured to receive a detection result and/or operation indication information corresponding to the detection result in the wireless communication manner, wherein the detection result is obtained by the base station according to the operation request.

19. The device according to claim 18, **characterized in that** the device further comprises:
an acquiring component, configured to log in a network management system to acquire access authorization information used for accessing the base station; and
a second accessing component, configured to access the base station according to the access authorization information.

20. The device according to claim 19, **characterized in that** the acquiring component comprises:
a first acquiring element, configured to log in through a public communication network, the network management system to acquire the access authorization information; and
a second acquiring element, configured to communicate with a service worker of the network management system in a voice manner to acquire the access authorization information.

21. The device according to claim 20, **characterized in that** the device further comprises:
a storing component, configured to store the operation indication information corresponding to the detection result on the mobile terminal; and
an uploading component, configured to upload the operation indication information corresponding to the detection result to the network management system through a public communication network.

22. A mobile terminal, **characterized by** comprising: the device for maintaining the base station according to any one of claims 18 to 21.

23. A system for maintaining the base station, **characterized by** comprising:
the base station according to claim 17;
the mobile terminal according to claim 22; and
a network management system, configured to provide access authorization information used for accessing the base station for the mobile terminal, and store data uploaded by the base station and/or the mobile terminal, wherein the data comprises at least one of: a detection result and operation indication information corresponding to the detection result.
